# EUROPÄISCHE PATENTSCHRIFT

(11) **EP 3 516 379 B1**
(45) Veröffentlichungstag und Bekanntmachung des Hinweises auf die Patenterteilung: **05.03.2025**
(21) Anmeldenummer: 17771420.1
(22) Anmeldetag: 19.09.2017
(51) Int. Cl.: G01N 21/956

(54) **OPTISCHE UNTERSUCHUNGSEINRICHTUNG UND OPTISCHES UNTERSUCHUNGSVERFAHREN MIT SICHTBAREM UND INFRAROTEM LICHT FÜR HALBLEITERBAUTEILE**
OPTICAL EXAMINATION DEVICE AND OPTICAL EXAMINATION METHOD WITH VISIBLE AND INFRARED LIGHT FOR SEMICONDUCTOR COMPONENTS
DISPOSITIF D'ANALYSE OPTIQUE ET PROCÉDÉ D'ANALYSE OPTIQUE PAR RAYONS VISIBLES ET INFRAROUGES POUR COMPOSANTS SEMI-CONDUCTEURS

(30) Priorität: 21.09.2016 DE 102016011497
(43) Veröffentlichungstag der Anmeldung: 31.07.2019
(73) Patentinhaber: MB Automation GmbH & Co. KG, 93426 Roding (DE)
(72) Erfinder: PRAKAPENKA, Uladimir, 93426 Roding (DE); SPICHTINGER, Stephan, 92526 Oberviechtach (DE); MIEHLICH, Rainer, 82024 Taufkirchen (DE)
(74) Vertreter: Schmidt, Steffen J.
(86) Internationale Anmeldenummer: PCT/EP2017/073619
(87) Internationale Veröffentlichungsnummer: WO 2018/054895

(56) Entgegenhaltungen:
- DE-A1- 102008 028 869
- DE-T5- 112008 002 282
- US-A1- 2011 025 838
- WIKIPEDIA: "Wafer - Wikipedia", 18 March 2021 (2021-03-18), XP055787478, Retrieved from the Internet <URL:https://de.wikipedia.org/wiki/Wafer> [retrieved on 20210318]
- WIKIPEDIA: "Grabenisolation - Wikipedia", 22 March 2021 (2021-03-22), pages 1 - 3, XP055788169, Retrieved from the Internet <URL:https://de.wikipedia.org/wiki/Grabenisolation> [retrieved on 20210322]

## Beschreibung

### Hintergrund

Hier wird eine optische Untersuchungseinrichtung mit sichtbarem und infrarotem Licht für Halbleiterbauteile beschrieben.

Ein Halbleiterbauteil ist hier zum Beispiel ein elektronisches, vorwiegend aus Silizium bestehendes Halbleiterbauteil, auch als "chip" oder "die" bezeichnet. Ein solches Bauteil hat in der Regel einen rechteckförmigen oder quadratischen Querschnitt mit mehreren Mantelflächen sowie eine Stirnfläche und eine Deckfläche. Die Mantelflächen sowie die beiden (untere und obere) Deckflächen des Bauteils sind nachfolgend allgemein als Oberflächen bezeichnet. Das Bauteil kann auch eine von vier abweichende Anzahl von Mantelflächen haben.

Aus der betrieblichen Praxis der Anmelderin sind sogenannte Aufnehm- und Absetzvorrichtungen bekannt, in denen Bauteile mittels eines Saugers oder Festhalters von einem Bauteiltisch aufgenommen und anschließend auf einem Träger oder in einem Transportbehälter oder dergl. abgelegt werden. Vor dem Ablegen des Bauteils findet üblicherweise eine Inspektion des Bauteils statt. Dazu werden Abbildungen einer oder mehrerer Seitenflächen des Bauteils mit einer oder mehreren Kameras aufgenommen und mittels automatisierter Bildverarbeitung ausgewertet.

### Stand der Technik

Optische Untersuchungseinrichtungen zur Inspektion von Halbleiterbauteilen während oder nach Beendigung des Fertigungsbetriebs sind als Stand der Technik bekannt. DE 10 2010 053 912 B4 derselben Anmelderin offenbart eine optische Untersuchungseinrichtung und ein optisches Untersuchungsverfahren zur äußeren Inspektion von elektronischen Bauteilen, beinhaltent eine Bauteilfördereinrichtung, welche die Bauteile in verschiedene Untersuchungsbereiche befördert. In den verschiedenen Untersuchungsbereichen werden verschiedene Oberflächen des Bauteils beleuchtet und Bildeinzüge verschiedener Oberflächen mithilfe einer Kameraanordnung erstellt.

Das Dokument DE 10 2012 010 406 A1 offenbart eine Vorrichtung zur Prüfung einer Solarzelle. Hierbei wird die Solarzelle nacheinander mit Licht unterschiedlicher Wellenlänge bzw. Farbe beleuchtet. Anhand jeweils erstellter Bildeinzüge wird eine äußere Beschädigungsfreiheit der Solarzelle überprüft. Ergänzend hierzu wird die Rückseite der Solarzelle mit Infrarotlicht beleuchtet, welches die Solarzelle teilweise durchdringt. Anhand eines im Infrarotbereich erstellten Bildeinzugs wird eine innere Beschädigungsfreiheit der Solarzelle überprüft.

Das Dokument DE 11 2008 002 282 T2 offenbart eine Vorrichtung zur Inspektion von Leiterplatten. Eine Leiterplatte wird hierbei nacheinander Strahlungen mit jeweils unterschiedlichen Wellenlängen ausgesetzt. Hierbei werden jeweils Bildeinzüge erstellt und mit Referenzeinzügen verglichen, um eine Beschädigungsfreiheit der Leiterplatte zu überprüfen. Die Strahlungen können Licht im infraroten oder infrarotnahen Wellenlängenbereich umfassen.

Das Dokument WO 2009/124817 A1 zeigt eine optische Erfassungsvorrichtung und ein Verfahren für die Erfassung von Oberflächen von Bauteilen. Hierbei wird die Oberfläche eines Bauteils mit Licht aus unterschiedlichen Lichtquellen und mit unterschiedlichen Wellenlängen beleuchtet, während eine Kameraeinrichtung Bildeinzüge des Bauteils erstellt.

Das Dokument US 6 094 263 A zeigt eine Vorrichtung zur optischen Inspektion von Halbleiterbauteilen. Durch eine Anordnung optisch aktiver Elemente wird die Aufnahme einer Mehrzahl von Seitenflächen des Bauteils auf einem gemeinsamen Bildeinzug ermöglicht.

Aus der US 2011/0025838 A1 ist eine Vorrichtung zur Prüfung von Wafern auf Defekte bekannt. Die Vorrichtung weist einen Halter auf, mit dem ein zu prüfender Wafer gehalten ist. Weiter weist die Vorrichtung eine erste Lichtquellen/Bildaufnahme-Einheit auf, die der Vorderseite des Wafers gegenüberliegend angeordnet ist. Die erste Lichtquellen/Bildaufnahme-Einheit umfasst eine erste Lichtquelle zur Abstrahlung von sichtbarem Licht und infraroter Strahlung und eine erste Bildaufnahmevorrichtung zur Aufnahme eines Bilds der Vorderseite des Wafers. Weiter weist die Vorrichtung eine zweite Lichtquellen/Bildaufnahme-Einheit auf, die der Rückseite des Wafers gegenüberliegend angeordnet ist. Die zweite Lichtquellen/Bildaufnahme-Einheit umfasst eine zweite Lichtquelle zur Abstrahlung von sichtbarem Licht und infraroter Strahlung und eine zweite Bildaufnahmevorrichtung zur Aufnahme eines Bilds der Rückseite des Wafers. Eine von der ersten Lichtquelle auf die Vorderseite des Wafers abgestrahlte Infrarotstrahlung wird von der Vorderseite des Wafers reflektiert und von der ersten Bildaufnahmevorrichtung als ein erstes Reflexionsbild erfasst. Entsprechendes gilt für von der ersten Lichtquelle abgestrahltes sichtbares Licht. Eine von der zweiten Lichtquelle auf die Rückseite des Wafers abgestrahlte Infrarotstrahlung durchsetzt teilweise den Wafer und wird von der ersten Bildaufnahmevorrichtung als ein Transmissionsbild erfasst. Eine von der zweiten Lichtquelle auf die Rückseite des Wafers abgestrahlte Infrarotstrahlung wird von der Rückseite des Wafers reflektiert und von der zweiten Bildaufnahmevorrichtung als ein zweites Reflexionsbild erfasst. Entsprechendes gilt für von der zweiten Lichtquelle abgestrahltes sichtbares Licht. Aus den so aufgenommenen Bildern wird ein Defekt-Bild erzeugt und auf einem Monitor angezeigt.

Aus der US 2008/0107509 A1 ist ein Roboterarm mit einem gabelartigen Greifer bekannt, der sich zum Ergreifen eines Wafers mittels Unterdruck eignet. Der Unterdruck wirkt über mehrere Öffnungen, die entlang der Gabelform des Greifers ausgebildet sind. Der Greifer lässt sich um unterschiedliche Achsen drehen. Der Greifer eignet sich insbesondere zum Ergreifen von verformten Wafern, beispielsweise durchgebogenen oder verwundenen Wafern.

### Zu lösendes Problem

Eine verbesserte optische Untersuchungseinrichtung soll eine Inspektion eines Halbleiterbauteils auf Beschädigungen oder Eigenschaftsfehler aus mehreren Betrachtungsrichtungen ermöglichen.

### Hier vorgestellte Lösung

Diese Aufgabe löst eine optische Untersuchungseinrichtung, Untersuchungseinrichtung, wie in den Ansprüchen 1 oder 2 definiert, die zur Erfassung von Eigenschaften eines Bauteils geeignet und bestimmt ist, insbesondere in einer Bauteilhandhabungsvorrichtung, welche die optische Untersuchungseinrichtung beinhaltet. Die Untersuchungseinrichtung verfügt wenigstens über zwei voneinander abweichenden Erfassungsspektren, wobei eines der Erfassungsspektren dem Infrarotbereich zuzuordnen ist. Sie ist insbesondere dazu geeignet und bestimmt, gleichzeitig Eigenschaftsfehler an der Oberfläche und im Inneren eines Halbleiterbauteils zu erfassen. Die optische Untersuchungseinrichtung beinhaltet eine bildgebende Vorrichtung, welche dazu geeignet und bestimmt ist, mit Strahlungsquellen zusammenzuwirken, die hinsichtlich ihres Strahlungsspektrums und ihrer Strahlungsauftreffwinkel aufeinander abgestimmt sind. Die bildgebende Vorrichtung ist geeignet und eingerichtet, für jedes der Erfassungsspektren einer ihr nachgeordneten Bildauswertung einen separaten Bildeinzug bereitzustellen.

Die hier vorgestellte optische Untersuchungseinrichtung ist geeignet und bestimmt zur Erfassung von Eigenschaften eines rechteckigen, von einem Substrat gelösten Halbleiterbauteils. Sie umfasst hierbei eine erste Beleuchtungsanordnung, eine zweite Beleuchtungsanordnung und eine bildgebende Vorrichtung. Die erste Beleuchtungsanordnung ist dazu geeignet und bestimmt, infrarotes Licht jeweils senkrecht auf zwei der bildgebenden Vorrichtung jeweils abgewandte Oberflächen des Halbleiterbauteils zu emittieren, wobei das infrarote Licht zumindest anteilig das Halbleiterbauteil vollständig durchdringt. Die zweite Beleuchtungsanordnung ist dazu geeignet und bestimmt, sichtbares Licht, insbesondere rotes Licht, jeweils senkrecht auf zwei der bildgebenden Vorrichtung jeweils zugewandte Oberflächen des Halbleiterbauteils zu emittieren. Die Beleuchtung des Halbleiterbauteils durch die erste und die zweite Beleuchtungsanordnung erfolgt gleichzeitig. Die bildgebende Vorrichtung ist dazu ausgebildet und angeordnet, sowohl das von der ersten als auch das von der zweiten Beleuchtungsanordnung emittierte Lichtspektrum zu erfassen und einer nachgeordneten Bildauswertung, auf Grundlage sowohl des sichtbaren als auch des infraroten Lichtspektrums, je einen separaten Bildeinzug zur Ermittlung von Eigenschaftsfehlern und/oder Beschädigungen des Halbleiterbauteils bereitzustellen. Die bildgebende Vorrichtung nutzt hierbei zumindest abschnittsweise denselben optischen Strahlengang zur Aufnahme des von den Oberflächen des Bauteils reflektierten sichtbaren Lichts und zur Aufnahme des das Bauteil durchdringenden infraroten Lichts.

Die Untersuchungseinrichtung weist eine Entnahmevorrichtung auf, welche eine erste Aufnahmeeinheit umfasst, die ein einzelnes von einem Substrat gelöstes rechteckiges Halbleiterbauteil aufnimmt und eine zweite Aufnahmeeinheit, die das Halbleiterbauteil in eine Untersuchungsposition fördert. Alternativ umfasst die Untersuchungseinrichtung eine Wendeeinrichtung, die zumindest einen Aufnehmer umfasst, der ein rechteckiges Halbleiterbauteil mittels Unterdruck hält.

Gemäß der beanspruchten Erfindung beinhaltet die optische Untersuchungseinrichtung eine Anzahl optisch wirksamer Elemente, insbesondere Umlenkspiegel, Prismen, Farbfilter und/oder Linsen, welche sich für sichtbares und/oder infrarotes Licht eignen.

In einer Variante beinhaltet die optische Untersuchungseinrichtung mindestens einen Halbspiegel, wobei der Halbspiegel unter einem Winkel von etwa 45° zur optischen Achse der bildgebenden Vorrichtung angeordnet ist und dazu dient, Licht der ersten und/oder zweiten Beleuchtungsanordnung optisch einzukoppeln und auf das Bauteil zu richten. Der Halbspiegel ist hierbei dazu geeignet und angeordnet, das von dem Bauteil reflektierte sichtbare Licht und das das Bauteil durchdringende infrarote Licht auf die bildgebende Vorrichtung zu richten.

Gemäß der beanspruchten Erfindung besteht die erste und/oder zweite Beleuchtungsanordnung jeweils aus mehreren LEDs Die LEDs der ersten Beleuchtungsanordnung sind hierbei dazu geeignet, infrarotes Licht zu emittieren (1200 nm plus minus 100nm) und/oder die LEDs der zweiten Beleuchtungsanordnung sind hierbei dazu geeignet, sichtbares zum Beispiel rotes

Licht zu emittieren (zum Beispiel 630 nm plus minus 30 nm).

In einer Variante sind die LEDs der ersten und/oder der zweiten Beleuchtungsanordnung so angeordnet, dass sie jeweils eine Mehrzahl von Oberflächen des Halbleiterbauteils beleuchten. Dies kann auch dadurch realisiert werden, dass ein/mehrere optisch wirksame/s Element/e dazu verwendet wird/werden, das durch die LEDs emittierte Licht auf eine Mehrzahl von Oberflächen des Halbleiterbauteils zu richten.

Die bildgebende Vorrichtung umfasst zwei bildgebende Sensoren, insbesondere Kamerasensoren. Hierbei sind der erste und der zweite bildgebende Sensor, unmittelbar oder mittels optisch wirksamer Elemente, auf zwei verschiedene Oberflächen des Halbleiterbauteils gerichtet. Der erste und der zweite bildgebende Sensor sind darüber hinaus jeweils dazu ausgebildet und angeordnet, sowohl das von der ersten Beleuchtungseinrichtung emittierte sichtbare als auch das von der zweiten Beleuchtungseinrichtung emittierte infrarote Licht zu erfassen und zu verarbeiten. Weiter sind die beiden bildgebenden Sensoren dazu ausgebildet und angeordnet, einer nachgeordneten Bildauswertung, sowohl auf Basis des sichtbaren als auch auf Basis des infraroten Lichts, je einen separaten Bildeinzug bereitzustellen.

In einer Variante ist die erste Beleuchtungsanordnung und/oder die zweite Beleuchtungsanordnung und/oder ein einzelnes oder eine Mehrzahl von optisch wirksamen Element/en dazu ausgebildet und angeordnet, jeweils unabhängig von den anderen ausgerichtet und/oder justiert/fokussiert werden.

Ein Verfahren, wie in Anspruch 5 definiert, zur optischen Untersuchung von Halbleiterbauteilen umfasst folgende Verfahrensschritte:
- Beleuchtung zweier unterschiedlicher Oberflächen eines Halbleiterbauteils mit infrarotem Licht, welches jeweils zumindest anteilig das Halbleiterbauteil vollständig durchdringt.
- Beleuchtung zweier unterschiedlicher Oberflächen des Halbleiterbauteils mit sichtbarem Licht, wobei die mit sichtbarem Licht beleuchteten Oberflächen jeweils den mit infrarotem Licht beleuchteten Oberflächen gegenüberliegen.
- Erfassen des von den zwei mit sichtbarem Licht beleuchteten Oberflächen des Bauteils reflektierten sichtbaren Lichts und des das Bauteil von den zwei mit infraroten Licht beleuchteten Oberflächen her durchdringenden infraroten Lichts mit mindestens einer bildgebende Vorrichtung, insbesondere einer Kamera, welche hierfür jeweils zumindest teilweise denselben optischen Strahlengang nutzt.
- Erstellen jeweils mindestens eines Bildeinzuges, basierend jeweils auf dem zur Beleuchtung verwendeten sichtbaren und dem zur Beleuchtung verwendeten infraroten Licht, durch die bildgebende Vorrichtung. Insbesondere Erstellen von jeweils zwei Bildeinzügen in Richtung der zwei mit sichtbarem Licht beleuchteten Oberflächen des Bauteils, wobei jeweils einer der jeweils zwei Bildeinzüge auf Grundlage des durch die Bauteiloberfläche reflektierten sichtbaren Lichts und einer auf Grundlage des das Bauteil durchdringenden infraroten Lichts erstellt wird.
- Untersuchung des Bauteils auf Fehler- oder Schadhaftigkeit durch eine nachgeordnete Bildauswertung anhand der Bildeinzüge.

### Kurzbeschreibung der Figuren

Weitere Merkmale, Eigenschaften, Vorteile und mögliche Abwandlungen werden für einen Fachmann anhand der nachstehenden Beschreibung deutlich, in der auf die beigefügten Zeichnungen Bezug genommen ist. Dabei zeigen die Fig. schematisch zwei Ausführungsbeispiele für eine optische Untersuchungseinrichtung für ein Halbleiterbauteil, ohne die Varianten der beschriebenen Vorrichtung auf diese zu beschränken.

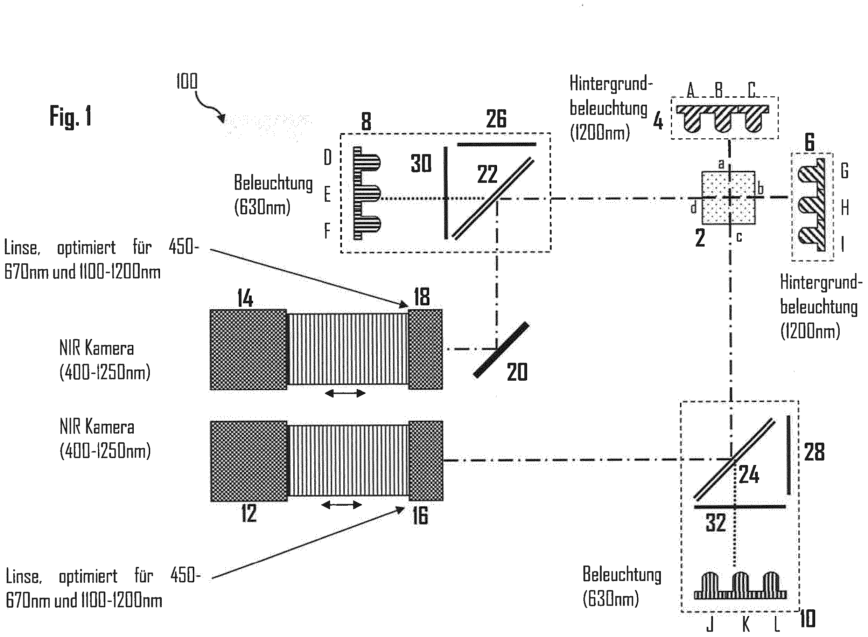

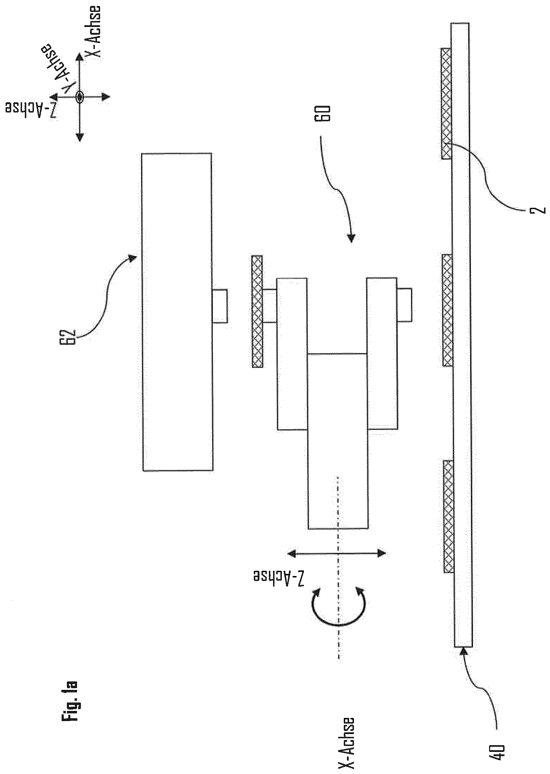

Fig. 1 zeigt schematisch eine Untersuchungsvorrichtung für Halbleiterbauteile, bei der zwei Kameras gleichzeitig zwei rechtwinklig aneinandergrenzende und mit rotem Licht beleuchtete Oberflächen eines Halbleiterbauteils mit rechteckigem Grundriss erfassen. Gleichzeitig ermöglicht die Untersuchungsvorrichtung das Durchleuchten des Bauteils entlang zweier orthogonaler Achsen mit Infrarotlicht und die Erfassung des durch das Bauteil geleiteten Infrarotlichts mit den beiden Kameras.
Fig. 1a zeigt schematisch eine Seitenansicht einer Entnahmevorrichtung zum Aufnehmen der von einem Substrat gelösten Halbleiterbauteile.

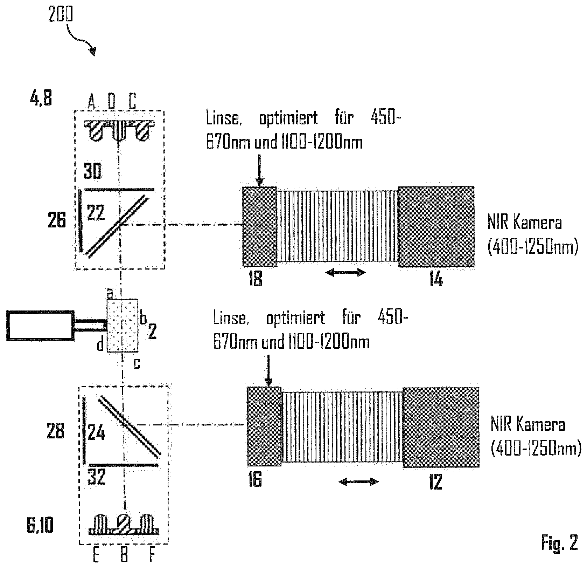

Fig. 2 zeigt schematisch eine Untersuchungsvorrichtung für Halbleiterbauteile, bei der zwei Kameras gleichzeitig zwei sich gegenüberliegende Oberflächen eines Halbleiterbauteils mit rechteckigem Grundriss erfassen. Gleichzeitig ermöglicht die Untersuchungsvorrichtung das Durchleuchten des Bauteils mit Infrarotlicht und die Erfassung des durch das Bauteil geleiteten Infrarotlichts mit den beiden Kameras.

### Detaillierte Beschreibung der Figuren

Fig 1. zeigt eine optische Untersuchungseinrichtungen 100. Hierin werden eine Oberfläche a und eine Oberfläche b eines Halbleiterbauteils 2 mit rechteckigem Grundriss jeweils mit Infrarotlicht (1200nm) durch eine erste Beleuchtungsanordnung 4, 6 beleuchtet. Die Beleuchtungsanordnung 4, 6 besteht hierbei aus zwei zueinander rechtwinklig angeordneten

Teilanordnungen, welche wiederum je aus drei LEDs gebildet werden. Die Teilanordnung 4 wird durch die LEDs A, B und C gebildet und die Teilanordnung 6 wird durch die LEDs G, H und I gebildet, wobei sowohl die LEDs A, B und C als auch die LEDs G, H und I dazu geeignet und bestimmt sind, Infrarotlicht (1200nm) senkrecht (90° plus minus bis zu 20°) auf die beiden Oberflächen a und b des Bauteils 2 zu emittieren.

Da Halbleitermaterialien, insbesondere Silizium, in Bezug auf Infrarotlicht, insbesondere im Infrarotnahbereich (ca. 780 nm, insbesondere 1000 nm, bis ca. 3000 nm / engl. Abk.: NIR), eine transparente Charakteristik aufweisen, durchdringt zumindest ein Teil des durch die Beleuchtungsanordnung 4, 6 emittierten Infrarotlichts das Halbleiterbauteil 2 vollständig. Das an den Oberflächen a und b in das Halbleiterbauteil 2 senkrecht einfallende Infrarotlicht tritt somit, zumindest teilweise, an den Oberflächen c und d senkrecht wieder aus.

Gleichzeitig werden die beiden Oberflächen c und d des Halbleiterbauteils 2 durch eine zweite Beleuchtungsanordnung 8, 10 mit rotem Licht (630 nm) beleuchtet. Die Beleuchtungsanordnung 8, 10 besteht hierbei aus zwei zueinander rechtwinklig angeordneten Teilanordnungen, welche wiederum je aus drei LEDs gebildet werden. Die Teilanordnung 8 wird durch die LEDs D, E und F gebildet und die Teilanordnung 10 wird durch die LEDs J, K und L gebildet, wobei sowohl die LEDs D, E und F als auch die LEDs J, K und L dazu geeignet und bestimmt sind, rotes Licht (630 nm) senkrecht (90° plus minus bis zu 20°) auf die Oberflächen c und d des Bauteils 2 zu emittieren.

Das durch die Teilanordnungen 8 und 10 emittierte rote Licht passiert hierbei zunächst jeweils eine Fokussierlinse 30, 32 und anschließend einen Halbspiegel 22, 24 bevor es senkrecht (90° plus minus bis zu 20°) auf die Bauteiloberflächen c, d auftrifft. Eine Abschirmung 26, 28 aus schwarzer Folie verhindert das Auftreten von unerwünschtem Neben- oder Streulicht.

Die Halbspiegel 22 und 24 sind in der gezeigten Vorrichtung in einem 45° Winkel relativ zur Emissionsrichtung der Teilanordnungen 8 und 10 positioniert und dazu geeignet und bestimmt, das durch die zweite Beleuchtungsanordnung 8, 10 emittierte Licht in Richtung des Bauteils 2 durchzuleiten, jedoch das von den Bauteiloberflächen c und d in Gegenrichtung reflektierte Licht in einem 90° Winkel relativ zur jeweiligen Emissionsrichtung der Teilanordnungen 8 und 10 zu reflektieren.

Weiterhin sind die Halbspiegel 22, 24 dazu geeignet und bestimmt, das aus den Bauteiloberflächen c und d austretende Infrarotlicht der Beleuchtungsanordnung 4, 6 in der gleichen Weise zu reflektieren, wie das aus diesen Richtungen stammende rote Licht, welches durch die Bauteiloberflächen c und d reflektiert wurde.

Ein Spiegel 20 dient der in Fig. 1 gezeigten Vorrichtung dazu, den optischen Strahlengang des durch den Halbspiegel 22 reflektierten roten und infraroten Lichts parallel zu dem durch den Halbspiegel 24 reflektierten roten und infraroten Lichts zu richten.

Weiter zeigt Fig. 1 zwei Kameras 12 und 14, welche so positioniert sind, dass sie jeweils das ursprünglich durch die Teilanordnungen 4, 8 oder 6, 10 emittierte rote und infrarote Licht erfassen. Die Erfassungsrichtungen der zwei Kameras 12 und 14 sind jeweils auf eine der zwei mit sichtbarem Licht beleuchteten Oberflächen c, d des Halbleiterbauteils gerichtet.

Die in Fig. 1 gezeigten Kameras 12 und 14 eignen sich sowohl zur Erstellung von Bildeinzügen auf Basis von sichtbarem rotem Licht als auch zur Erstellung von Bildeinzügen auf Basis von infrarotem Licht. Die Kameralinsen 16 und 18 der Kameras 12 und 14 sind jeweils für einen Wellenlängenbereich von 450-670 nm und 1100-1200 nm optimiert. Die Kameras sind darüber hinaus dazu ausgebildet und angeordnet, einer nachgeordneten Bildauswertung Bildeizüge zur Inspektion des Bauteils, insbesondere zur Feststellung von Beschädigungen und/oder Eigenschaftsfehlern, basierend jeweils auf rotem und infrarotem Licht zur Verfügung zu stellen.

In der Bildauswertung wird mittels Bildverarbeitung und/oder mittels Vergleich mit Bildeinzügen von fehler- /schadlosen Bauteilen die Entscheidung (Auswurf, Weiterleitung) über die aktuell untersuchten Bauteile getroffen.

Ein Vorteil dieser Untersuchungsanordnung bestehen darin, dass zwei Oberflächen a,b des Bauteils 2 (durch Bildeinzüge, welche auf rotem Licht basieren) auf äußere Beschädigung und/oder Eigenschaftsfehler hin überprüft werden können und gleichzeitig (durch Bildeinzüge, welche auf infrarotem Licht basieren) das Innere des Bauteils 2 auf Beschädigung und/oder Eigenschaftsfehler hin überprüft werden kann, ohne die Kamerasensoren in ihrer Position zu verändern. Die Oberflächen c, d können in der gleichen Weise nach einer Rotation des Bauteils in einer Untersuchungsebene um 180° überprüft werden.

In Fig. 1a ist eine Seitenansicht einer Entnahmevorrichtung zum Aufnehmen der von einem Substrat 40 gelösten Halbleiterbauteile 2 gezeigt.

An der von der Untersuchungseinrichtung 100 abgewandten Seite eines Substrats 40 ist eine Ablöseeinheit (Ausstoßnadel oder Laser) angeordnet und dazu eingerichtet ein Halbleiterbauteil 2 von dem Substrat 40 zumindest teilweise zu lösen.

In dieser Darstellung ist eine Ablöseeinheit zum Lösen der auf dem Substrat 40 bereitgestellten Halbleiterbauteile 2 aus Übersichtsgründen nicht gezeigt. Ebenso ist die Untersuchungsvorrichtung aus Fig. 1 nicht gezeigt.

Die Entnahmevorrichtung umfasst eine Aufnahmeeinheit 60, die dazu eingerichtet ist, die gelösten Halbleiterbauteile 2 von dem Substrat 40 aufzunehmen und diese mittels einer Drehbewegung um die X-Achse um 180° zu wenden und an eine Übergabeposition für eine weitere Aufnahmeeinheit 62 zu transportieren.

Hierzu ist die Aufnahmeeinheit 60 weiterhin dazu eingerichtet, entlang der Z-Achse bewegt zu werden. Weiterhin umfasst die Aufnahmeeinheit 60 an ihrem Umfang zwei oder mehr Aufnehmer. Die weitere Aufnahmeeinheit 62 ist dazu eingerichtet, die Halbleiterbauteile 2 an der Übergabeposition von der Aufnahmeeinheit 60 aufzunehmen und in eine Untersuchungsposition (dargestellt in Fig. 1) zu fördern.

Die Übergabeposition liegt in der Untersuchungsebene und kann mit der Untersuchungsposition übereinstimmen oder von ihr verschieden sein. Die Bildaufnahmeachsen der Kameras 12, 14 in Figur 1 liegen in der Untersuchungsebene.

Die Aufnahmeeinheit 62 ist weiterhin dazu eingerichtet die Halbleiterbauteile 2 nach dem Untersuchen der Halbleiterbauteile 2 in der Untersuchungsposition in einem Zwischenspeicher 64 abzulegen; entsprechend ist die weitere Aufnahmeeinrichtung 62 entlang der Y-Achse und der Z-Achse bewegbar, sowie um die Z-Achse rotierbar. Die Aufnahmeeinheit 60 und die weitere Aufnahmeeinheit 62 sind hier als Vakuumgreifer bereitgestellt.

Fig 2. zeigt eine optische Untersuchungseinrichtungen 200. Hierin wird eine Oberfläche a und eine Oberfläche c eines Halbleiterbauteils 2 mit rechteckigem Grundriss jeweils mit Infrarotlicht (1200nm) durch eine erste Beleuchtungsanordnung 4, 6 und gleichzeitig mit rotem Licht (630nm) durch eine zweite Beleuchtungsanordnung 8, 10 beleuchtet.

Die erste Beleuchtungsanordnung 4, 6 besteht hierbei aus zwei, in Bezug auf das Halbleiterbauteil 2, gegenüberliegenden Teilanordnungen 4 und 6, welche jeweils aus LEDs gebildet werden. Die Teilanordnung 4 wird durch die LEDs A und C gebildet und die Teilanordnung 6 wird durch die LED B gebildet, wobei die LEDs A, B und C jeweils dazu geeignet und bestimmt sind, Infrarotlicht (1200nm) senkrecht auf eine der Oberflächen a und c des Bauteils 2 zu emittieren.

Die zweite Beleuchtungsanordnung 8, 10 beleuchtet die Oberflächen a und c mit rotem Licht (630 nm). Die Beleuchtungsanordnung 8, 10 besteht hierbei aus zwei, in Bezug auf das Halbleiterbauteil 2, gegenüberliegenden Teilanordnungen 8 und 10, welche jeweils aus LEDs gebildet werden. Die Teilanordnung 8 wird durch die LED D gebildet und die Teilanordnung 10 wird durch die LEDs E und F gebildet, wobei die LEDs D, E und F jeweils dazu geeignet und bestimmt sind rotes Licht (630 nm) senkrecht auf eine der Oberflächen c und a des Bauteils 2 zu emittieren.

Zumindest ein Teil des durch die Beleuchtungsanordnung 4, 6 emittierten Infrarotlichts durchdringt das Halbleiterbauteil 2 vollständig. Das an den Oberflächen a und c in das Halbleiterbauteil 2 senkrecht (90° plus minus bis zu 20°) eintretende Infrarotlicht tritt somit, zumindest teilweise, an den jeweils gegenüberliegenden Oberflächen c und a wieder aus.

Das durch die Beleuchtungsanordnungen 4, 6, 8, 10 emittierte rote und infrarote Licht passiert in Fig. 2 zunächst jeweils eine Fokussierlinse 30, 32 und anschließend einen Halbspiegel 22, 24 bevor es senkrecht auf die Bauteiloberflächen c, a auftrifft. Eine Abschirmung 26, 28 aus schwarzer Folie verhindert das Auftreten von unerwünschtem Neben- oder Streulicht.

Die Halbspiegel 22 und 24 sind in der Fig. 2 gezeigten Vorrichtung in einem 45° Winkel relativ zur Emissionsrichtung der Beleuchtungsanordnungen 4, 6, 8, 10 positioniert und dazu geeignet und bestimmt, das durch die durch die Beleuchtungsanordnungen 4, 6, 8, 10 emittierte Licht in Richtung des Bauteils 2 durchzuleiten, aber das von den Bauteiloberflächen a und c in Gegenrichtung reflektierte Licht in einem 90° Winkel relativ zur Emissionsrichtung der Beleuchtungsanordnungen 4, 6 ,8, 10 zu reflektieren.

Weiterhin sind die Halbspiegel 22, 24 dazu geeignet und bestimmt, das senkrecht aus den Bauteiloberflächen a und c austretende Infrarotlicht der Beleuchtungsanordnung 4, 6 in der gleichen Weise zu reflektieren wie das aus diesen Richtungen stammende rote Licht, welches zuvor durch die Bauteiloberflächen a und c reflektiert wurde.

Weiter zeigt die Vorrichtung zwei Kameras 12 und 14, welche so positioniert sind, dass sie sich dazu eignen jeweils das ursprünglich durch die Teilanordnungen 4, 10 oder 6, 8 emittierte rote oder infrarote Licht zu erfassen. Die Erfassungsrichtungen der zwei Kameras 12 und 14 sind jeweils auf eine der zwei mit sichtbarem Licht beleuchteten Oberflächen a, c des Halbleiterbauteils gerichtet.

Die in der Vorrichtung gezeigten Kameras 12 und 14 eignen sich sowohl zur Erstellung von Bildeinzügen auf Basis von rotem Licht als auch zur Erstellung von Bildeinzügen auf Basis von infrarotem Licht. Die Kameralinsen 16 und 18 der Kameras 12 und 14 sind jeweils für einen Wellenlängenbereich von 450 - 670 nm und 1100 - 1200 nm optimiert. Die Kameras sind darüber hinaus dazu ausgebildet und angeordnet, einer nachgeordneten Bildauswertung Bildeizüge zur Inspektion des Bauteils, insbesondere zur Feststellung von Beschädigungen und/oder Eigenschaftsfehlern, basierend jeweils auf rotem und infrarotem Licht zur Verfügung zu stellen.

Ein Vorteil dieser Untersuchungsanordnung bestehen darin, dass zwei Oberflächen a, c des Bauteils 2 (durch Bildeinzüge, welche auf rotem Licht basieren) auf äußere Beschädigung und/oder Eigenschaftsfehler hin überprüft werden können und gleichzeitig (durch Bildeizüge, welche auf infrarotem Licht basieren) das Innere des Bauteils auf Beschädigung und/oder Eigenschaftsfehler hin überprüft werden kann, ohne die Kamerasensoren in ihrer Position zu verändern. Die Oberflächen b, d können in der gleichen Weise nach einer Rotation des Bauteils um 90° überprüft werden.

Die in den Fig. 1 und 2 in Punkt-Linien schematisch gezeigten optische Strahlengänge werden ausschließlich durch rotes Licht genutzt, die durch Strich-Linien gezeigten optischen Strahlengänge werden ausschließlich durch infrarotes Licht genutzt und die durch Punkt-Strich-Linien gezeigten optischen Strahlengänge werden sowohl durch rotes als auch durch infrarotes Licht genutzt.

Das Halbleiterbauteil 2 wird an einem Aufnehmer gehalten. Der Aufnehmer ist Teil einer ersten Wendeeinrichtung, welche die Form eines Sterns oder Rades hat. Diese erste Wendeeinrichtung hat an ihrem Umfang mehrere, beispielsweise acht, Aufnehmer und ist um eine Drehachse drehbar. Jeder der Aufnehmer ist dazu eingerichtet, ein Halbleiterbauteil mittels Unterdruck zu halten. Die erste Wendeeinrichtung wirkt mit einer im Wesentlichen baugleichen und um eine Drehachse drehbaren zweiten Wendeeinrichtung zusammen, wobei das Halbleiterbauteil 2 von der ersten Wendeeinrichtung an die zweite Wendeeinrichtung an einer Übergabestelle übergebbar ist. Die zweite Wendeeinrichtung kann ebenfalls eine optische Untersuchungseinrichtung, wie in Figur 1 gezeigt, umfassen.

Die erste und die zweite Wendeeinrichtung können auch orthogonal zueinander angeordnet sein.

Die vorangehend beschriebenen Varianten der Vorrichtung sowie deren Aufbau- und Betriebsaspekte dienen lediglich dem besseren Verständnis der Struktur, der Funktionsweise und der Eigenschaften; sie schränken die Offenbarung nicht etwa auf die Ausführungsbeispiele ein. Die Fig. sind teilweise schematisch, wobei wesentliche Eigenschaften und Effekte zum Teil deutlich vergrößert dargestellt sind, um die Funktionen, Wirkprinzipien, technischen

Ausgestaltungen und Merkmale zu verdeutlichen. Die Erfindung wird von den Ansprüchen definiert.

## Patentansprüche

1. Eine optische Untersuchungseinrichtung (100), geeignet und bestimmt zur Erfassung von Eigenschaften eines rechteckigen von einem Substrat (40) gelösten und von einer Entnahmevorrichtung in einer Untersuchungsposition positionierten Halbleiterbauteils (2), umfassend:
- eine Entnahmevorrichtung, welche eine erste Aufnahmeeinheit (60), mit zwei oder mehr an ihrem Umfang angeordneten Aufnehmern aufweist, wobei
Die erste Aufnahmeeinheit (60) dazu eingerichtet ist, um eine X-Achse gedreht und entlang einer Z-Achse bewegt zu werden; und wobei
die Aufnahmeeinheit (60) dazu eingerichtet ist, ein einzelnes von einem Substrat (40) gelöstes rechteckiges Halbleiterbauteil (2) aufzunehmen und dieses mittels einer Drehbewegung um die X-Achse um 180° zu wenden und an eine Übergabeposition zu transportieren; wobei
eine zweite Aufnahmeeinheit (62) dazu eingerichtet ist, das Halbleiterbauteil (2) an der Übergabeposition von der ersten Aufnahmeeinheit (60) zu übernehmen und in die Untersuchungsposition zu fördern;
- eine erste Beleuchtungsanordnung (4, 6), eine zweite Beleuchtungsanordnung (8, 10) und
eine erste Kamera (12) und eine zweite Kamera (14); wobei beide Kameras (12, 14) dazu ausgebildet und angeordnet sind, Bildeinzüge auf der Grundlage von sichtbarem und von infrarotem Licht bereitzustellen; und wobei
die erste Kamera (12) und die zweite Kamera (14) jeweils dazu eingerichtet sind, auf unterschiedliche Oberflächen des in der Untersuchungsposition befindlichen Halbleiterbauteils (2) gerichtet zu werden, und
die erste Beleuchtungsanordnung (4, 6) dazu eingerichtet ist, aus mehreren Lichtemitterdioden infrarotes Licht jeweils senkrecht auf zwei der bildgebenden Vorrichtung (12, 14) jeweils abgewandte und senkrecht aneinandergrenzende Oberflächen des in der Untersuchungsposition befindlichen Halbleiterbauteils (2) zu emittieren, und wobei
das auf die Oberflächen emittierte infrarote Licht jeweils dazu geeignet ist, zumindest anteilig das Halbleiterbauteil (2) vollständig zu durchdringen, und wobei
die zweite Beleuchtungsanordnung (8, 10) dazu eingerichtet ist, mit mehreren Lichtemitterdioden sichtbares Licht jeweils senkrecht auf zwei der bildgebenden Vorrichtung (12, 14) jeweils zugewandte und senkrecht aneinandergrenzende Oberflächen des in der Untersuchungsposition befindlichen Halbleiterbauteils (2), welche jeweils den Oberflächen gegenüberliegen, auf die infrarotes Licht von der ersten Beleuchtungsanordnung (4, 6) gerichtet ist, zu emittieren, und wobei
die erste Beleuchtungsanordnung (4, 6) und die zweite Beleuchtungsanordnung (8, 10) dazu eingerichtet sind, das Halbleiterbauteil (2) gleichzeitig zu beleuchten, und wobei
die zweite Beleuchtungsanordnung (8, 10) weiter dazu eingerichtet ist, das sichtbare Licht jeweils derart zu emittieren, dass es durch optisch wirksame Elemente (22, 24) geleitet wird, wobei die optisch wirksamen Elemente dazu ausgebildet sind, ein vorbestimmtes Maß an Durchlässigkeit für sichtbares Licht in einer Emissionsrichtung der zweiten Beleuchtungsanordnung (8, 10) aufzuweisen und ein vorbestimmtes Maß an Reflexion von sichtbarem und infrarotem Licht aus der jeweils um 180° entgegengesetzten Richtung aufzuweisen, wobei
die optisch wirksamen Elemente (22, 24) weiter dazu eingerichtet sind, das sichtbare Licht und das infrarote Licht jeweils in einer Richtung ungleich der Emissionsrichtungen der zweiten Beleuchtungsanordnung (8, 10) und der ihr um 180° entgegengesetzten Richtungen zu reflektieren, und wobei die erste Kamera (12) und die zweite Kamera (14) jeweils dazu ausgebildet und angeordnet sind, sowohl das von der ersten Beleuchtungsanordnung (4, 6) und als auch das von der zweiten Beleuchtungsanordnung (8, 10) emittierte Lichtspektrum zu erfassen, und wobei
die erste Kamera (12) und die zweite Kamera (14) jeweils dazu eingerichtet sind, einer nachgeordneten Bildauswertung auf Grundlage sowohl des sichtbaren als auch des infraroten Lichtspektrums jeweils einen separaten Bildeinzug zur Ermittlung von Eigenschaftsfehlern oder Beschädigungen des Halbleiterbauteils (2) bereitzustellen, wobei die Kameras (12, 14) jeweils dazu eingerichtet sind, zumindest abschnittsweise denselben optischen Strahlengang zur Aufnahme des von dem Bauteil (2) reflektierten sichtbaren Lichts und zur Aufnahme des das Bauteil (2) durchdringenden infraroten Lichts zu nutzen.

2. Eine optische Untersuchungseinrichtung (200) geeignet und bestimmt zur Erfassung von Eigenschaften eines rechteckigen von einem Substrat gelösten und von einer ersten Wendeeinrichtung gehaltenen Halbleiterbauteils (2), umfassend:
- eine um eine Drehachse drehbare Wendeeinrichtung in Form eines Rades, die an ihrem Umfang mehrere Aufnehmer aufweist, die jeweils dazu eingerichtet sind, ein rechteckiges Halbleiterbauteil (2) mit einem Unterdruck zu halten und an einer Übergabestelle an eine zur ersten Wendeeinrichtung im Wesentlichen baugleiche und ebenfalls um eine Drehachse drehbare zweite Wendeeinrichtung zu übergeben; - eine erste Beleuchtungsanordnung (4, 6), eine zweite Beleuchtungsanordnung (8, 10) und eine erste Kamera (12) und eine zweite Kamera (14); wobei beide Kameras (12, 14) dazu ausgebildet und angeordnet sind, Bildeinzüge auf Grundlage von sichtbarem und von infrarotem Licht bereitzustellen, und wobei
die erste Beleuchtungsanordnung (4, 6) aus mehreren Lichtemitterdioden besteht, welche dazu eingerichtet sind, infrarotes Licht jeweils senkrecht auf zwei der bildgebenden Vorrichtung (12, 14) jeweils abgewandte einander gegenüberliegende Oberflächen des von dem Aufnehmer gehaltenen Halbleiterbauteils (2) zu emittieren, wobei das infrarote Licht jeweils zumindest anteilig das Halbleiterbauteil (2) vollständig durchdringt, und
die zweite Beleuchtungsanordnung (8, 10) aus mehreren Lichtemitterdioden besteht, welche dazu eingerichtet sind, sichtbares Licht jeweils senkrecht auf zwei der bildgebenden Vorrichtung (12, 14) jeweils zugewandte einander gegenüberliegende Oberflächen des von dem Aufnehmer gehaltenen Halbleiterbauteils (2) zu emittieren, und wobei
die erste Beleuchtungsanordnung (4, 6) und die zweite Beleuchtungsanordnung (8, 10) dazu eingerichtet sind, das Halbleiterbauteil (2) gleichzeitig zu beleuchten, und wobei
die Beleuchtungsanordnungen (4, 6, 8, 10) weiter dazu eingerichtet sind, das sichtbare und infrarote Licht jeweils derart zu emittieren, dass es durch optisch wirksame Elemente (22, 24) geleitet wird, wobei die optisch wirksamen Elemente (22, 24) dazu ausgebildet sind, ein vorbestimmtes Maß an Durchlässigkeit für sichtbares und infrarotes Licht in einer jeweils gemeinsamen Emissionsrichtung der ersten und zweiten Beleuchtungsanordnung (4, 6, 8, 10) aufzuweisen und ein vorbestimmtes Maß an Reflexion von sichtbarem und infrarotem Licht aus der jeweils um 180° entgegengesetzten Richtung aufzuweisen, wobei
die optisch wirksamen Elemente (22, 24) weiter dazu eingerichtet sind, das sichtbare Licht und das infrarote Licht jeweils in einer Richtung ungleich der Emissionsrichtungen der zweiten Beleuchtungsanordnung (8, 10) und der ihr um 180° entgegengesetzten Richtungen zu reflektieren, und wobei
die beiden Kameras (12, 14) dazu eingerichtet sind, jeweils auf je eine der Oberflächen des Halbleiterbauteils (2) gerichtet zu werden, auf welche Licht durch die erste und zweite Beleuchtungsanordnung (4, 6, 8, 10) emittiert wird, und wobei
die erste Kamera (12) und die zweite Kamera (14) jeweils dazu ausgebildet und angeordnet sind, sowohl das von der ersten Beleuchtungsanordnung (4, 6) und als auch das von der zweiten Beleuchtungsanordnung (8, 10) emittierte Lichtspektrum zu erfassen, und wobei
die erste Kamera (12) und die zweite Kamera (14) jeweils dazu eingerichtet sind, einer nachgeordneten Bildauswertung auf Grundlage sowohl des sichtbaren als auch des infraroten Lichtspektrums jeweils einen separaten Bildeinzug zur Ermittlung von Eigenschaftsfehlern oder Beschädigungen des Halbleiterbauteils (2) bereitzustellen, und wobei die Kameras (12, 14) jeweils dazu eingerichtet sind, zumindest abschnittsweise denselben optischen Strahlengang zur Aufnahme des von dem Bauteil (2) reflektierten sichtbaren Lichts und zur Aufnahme des das Bauteil (2) durchdringenden infraroten Lichts zu nutzen.

3. Eine optische Untersuchungseinrichtung (100, 200) nach einem der vorangegangenen Ansprüche, wobei die optisch wirksamen Elemente (22, 24) mindestens einen Halbspiegel umfassen, wobei
der Halbspiegel (22, 24) unter einem Winkel von etwa 45° zur optischen Achse der bildgebenden Vorrichtung (12, 14) angeordnet ist und dazu dient, Licht der ersten und/oder zweiten Beleuchtungsanordnung (4, 6, 8, 10) optisch einzukoppeln und auf das Bauteil (2) zu richten, und wobei
der Halbspiegel (22, 24) dazu geeignet und angeordnet ist, das von dem Bauteil (2) reflektierte sichtbare Licht und das das Bauteil (2) durchdringende infrarote Licht auf die bildgebenden Vorrichtung (12, 14) zu richten.

4. Optische Untersuchungseinrichtung (100, 200) nach einem der vorangegangenen Ansprüche, wobei die erste Beleuchtungsanordnung (4, 6) und/oder die zweite Beleuchtungsanordnung (8, 10) und/oder ein einzelnes oder eine Mehrzahl der optisch wirksamen Elemente dazu ausgebildeten und angeordnet sind, jeweils unabhängig von den anderen ausgerichtet und/oder fokussiert zu werden.

5. Verfahren zur optischen Untersuchung von Halbleiterbauteilen (2) mit einer Vorrichtung nach dem Anspruch 1 oder einer Vorrichtung nach dem Anspruch 2, umfassend folgende Verfahrensschritte:
- Beleuchtung zweier unterschiedlicher Oberflächen eines von einer Aufnahmeeinheit oder einem Aufnehmer gehaltenen Halbleiterbauteils (2) mit infrarotem Licht, welches jeweils zumindest anteilig das Halbleiterbauteil (2) vollständig durchdringt,
- Beleuchtung zweier unterschiedlicher Oberflächen des von der Aufnahmeeinheit oder dem Aufnehmer gehaltenen Halbleiterbauteils (2) mit sichtbarem Licht, wobei die mit sichtbarem Licht beleuchteten Oberflächen jeweils den mit infrarotem Licht beleuchteten Oberfläche gegenüberliegen,
- Erfassen des von den zwei mit sichtbarem Licht beleuchteten Oberflächen des von der Aufnahmeeinheit oder dem Aufnehmer gehaltenen Bauteils (2) reflektierten sichtbaren Lichts und des das Bauteil (2) von den zwei mit infrarotem Licht beleuchteten Oberflächen her durchdringenden infraroten Lichts mit mindestens einer bildgebende Vorrichtung (12, 14) welche hierfür jeweils zumindest teilweise denselben optischen Strahlengang nutzt,
- Erstellen von jeweils zwei Bildeinzügen der jeweils mit dem sichtbarem Licht beleuchteten Oberflächen des Bauteils, wobei jeweils einer der zwei Bildeinzüge auf Grundlage des durch die Bauteiloberfläche reflektierten sichtbaren Lichts und einer auf Grundlage des das Bauteil (2) durchdringenden infraroten Lichts erstellt wird,
- Untersuchung des Bauteils auf Schadhaftigkeit durch eine nachgeordnete Bildauswertung anhand der Bildeinzüge.

## Claims

1. An optical examination device (100), suitable and intended for detection of features of a rectangular semiconductor component (2) detached from a substrate (40) and positioned in an examination position by an extraction device, comprising:
- an extraction device, which comprises a first receiving unit (60) with two or more pick-ups arranged at their circumference, wherein
the first receiving unit (60) is configured to be rotated around an x-axis and moved along a y-axis; and wherein
the receiving unit (60) is configured to receive a single rectangular semiconductor component (2) detached from a substrate (40) and turn it by means of a rotational movement by 180° around the x-axis and transport it to a transfer position; wherein
a second receiving unit (62) is configured to take over the semiconductor component (2) from the first receiving unit (60) at the transfer position and to convey it into the examination position;
- a first illumination arrangement (4, 6), a second illumination arrangement (8, 10) and a first camera (12) and a second camera (14); wherein the both cameras (12, 14) are configured and arranged to provide image indents on the basis of visible or infrared light; and wherein
the first camera (12) and the second camera (14) are configured to be pointed at different surfaces respectively of the semiconductor component (2) located in the examination position, and
the first illumination arrangement (4, 6) is configured to consist of one or more light emitting diode/diodes, which emit infrared light perpendicularly onto two surfaces respectively facing away from the imaging device (12, 14) and adjoining one another perpendicularly of the semiconductor component (2) located in the examination position, and wherein the infrared light emitted to the surfaces is configured to fully penetrate the semiconductor component (2) at least proportionally, and wherein
the second illumination arrangement (8, 10) is configured to emit visible light with multiple light emitting diodes perpendicularly onto two surfaces respectively facing the cameras (12, 14) and adjoining one another perpendicularly of the semiconductor component (2) located in the examination position, which surfaces lie respectively opposite the surfaces onto which infrared light from the first illumination arrangement (4, 6) is directed, and wherein
the first illumination arrangement (4, 6) and the second illumination arrangement (8, 10) are configured to illuminate the semiconductor component (2) simultaneously, and wherein
the second illumination arrangement (8, 10) is further configured to emit the visible light such that it is guided by optically effective elements (22, 24), the optically effective elements being arranged to have a predetermined degree of transmission of visible light in an emission direction of the second illumination arrangement (8, 10) and a predetermined degree of reflection of visible and infrared light from the respective 180° opposite direction, wherein the optically effective elements (22, 24) are further arranged to reflect the visible light and the infrared light respectively in a direction unequal to the emission directions of the second illumination arrangement (8, 10) and the directions 180° opposite thereto, and wherein
the first camera (12) and the second camera (14) are each configured and arranged to detect both the light spectrum emitted by the first illumination arrangement (4, 6) and the light spectrum emitted by the second illumination arrangement (8, 10), and wherein
the first camera (12) and the second camera (14) are each configured to provide respectively for downstream evaluation on the basis of both the visible and the infrared light spectrum a separate image capture in each case for determining property defects or damage of the semiconductor component (2), wherein the cameras (12, 14) are each configured to use the same optical beam path, at least in sections, to record the visible light reflected by the component (2) and to record the infrared light penetrating the component (2).

2. An optical examination device (200), suitable and intended for detection of features of a rectangular semiconductor component (2) detached from a substrate and held by a first turning device, comprising:
- a wheel-shaped turning device, rotatable around a rotation axis, which has multiple pick-ups at its circumference, each configured to hold a rectangular semiconductor component (2) by means of a negative pressure and to transfer it at a transfer point to a second turning device that is essentially identical to the first turning device and can also rotate about an axis of rotation;
- a first illumination arrangement (4, 6), a second illumination arrangement (8, 10) and a first camera (12) and a second camera (14), wherein both cameras (12, 14) are configured and arranged to provide image captures on the basis of visible or infrared light, and wherein
the first illumination arrangement (4, 6) consists of multiple light emitting diodes configured to emit infrared light perpendicularly onto two opposing surfaces respectively facing away from the imaging devices (12, 14) of the semiconductor component (2) held by the pick-up, wherein the infrared light fully penetrates the semiconductor component (2) at least proportionally, and
the second illumination arrangement (8, 10) consists of multiple light emitting diodes configured to emit visible light perpendicularly onto two opposing surfaces respectively facing the imaging devices (12, 14) of the semiconductor component (2) held by the pick-up, and wherein
the first illumination arrangement (4, 6) and the second illumination arrangement (8, 10) are configured to illuminate the semiconductor component (2) simultaneously, and wherein
the illumination arrangements (4, 6, 8, 10) are further configured to emit the visible and the infrared light such that it is guided through optically effective elements (22, 24), the optically effective elements (22, 24) being arranged to have a predetermined degree of transmission of visible and infrared light in a common emission direction in each case of the first and second illumination arrangement (4, 6, 8, 10) and a predetermined degree of reflection of visible and infrared light from the respective 180° opposite direction,
the optically effective elements (22, 24) being further arranged to reflect the visible light and the infrared light respectively in a direction unequal to the emission directions of the second illumination arrangement (8, 10) and the directions 180° opposite thereto, and wherein
the both cameras (12, 14) are each configured and arranged to be directed towards one of the surfaces of the semiconductor component (2) on which light is emitted through the first and second illumination arrangements (4, 6, 8, 10), and wherein
the first camera (12) and the second camera (14) are each configured and arranged to detect both the light spectrum emitted by the first illumination arrangement (4, 6) and the light spectrum emitted by the second illumination arrangement (8, 10), and wherein
the first camera (12) and the second camera (14) are each configured and arranged to provide respectively for downstream evaluation on the basis of both the visible and the infrared light spectrum a separate image capture in each case for determining property defects or damage of the semiconductor component (2), and wherein the cameras (12, 14) are each configured and arranged to use the same optical beam path, at least in sections, to record the visible light reflected by the component (2) and to record the infrared light penetrating the component (2).

3. The optical examination device (100, 200) according to one of the previous claims, wherein the optically effective elements (22, 24) comprise at least one half mirror, wherein
the half mirror (22, 24) is arranged at an angle of approximately 45° to the optical axis of the imaging device (12, 14) and serves to couple light of the first and/or second illumination arrangement (4, 6, 8, 10) optically and to direct it onto the component (2), and wherein
the half mirror (22, 24) is suitable and arranged to direct the visible light reflected by the component (2) and the infrared light penetrating the component (2) onto the imaging devices (12, 14).

4. The optical examination device (100, 200) according to any one of the previous claims, wherein the first illumination arrangement (4, 6) and/or the second illumination arrangement (8, 10) and/or a single or a plurality of optically active elements are configured and arranged to be respectively oriented and/or focused independently of the others.

5. A method for the optical examination of semiconductor components (2) with a device according to claim 1 or a device according to claim 2, comprising the following method steps:
- illumination of two different surfaces of a semiconductor component (2) held by a receiving unit or a pick-up with infrared light, which fully penetrates the semiconductor component (2) at least proportionally,
- illumination of two different surfaces of the semiconductor component (2) held by the receiving unit or the pick-up with visible light, wherein the surfaces illuminated with visible light lie respectively opposite the surfaces illuminated with infrared light,
- detection of the visible light reflected by the two surfaces of the component (2) held by a receiving unit or a pick-up that are illuminated by visible light and of the infrared light penetrating the component (2) from the two surfaces illuminated by infrared light by at least one imaging device (12, 14), which uses at least partially the same optical beam path for this,
- production of at least two image captures respectively of the surfaces of the component illuminated by visible light, wherein one of the two image captures is produced on the basis of the visible light reflected by the component surface and one is produced on the basis of the infrared light penetrating the component (2),
- examination of the component for defectiveness by downstream image evaluation by means of the image captures.

## Revendications

1. Un dispositif d'examen optique (100), approprié et déterminé pour détecter des propriétés d'un composant semi-conducteur rectangulaire (2) détaché d'un substrat (40) et positionné dans une position d'examen par un dispositif d'extraction, comprenant :
- un dispositif de prélèvement, qui comprend une première unité de prélèvement (60), avec deux ou plusieurs récepteurs disposés sur sa périphérie, dans lequel
la première unité de prise (60) est adaptée pour être tournée autour d'un axe X et déplacée le long d'un axe Z ; et dans lequel
l'unité de réception (60) est adaptée pour recevoir un seul composant semi-conducteur rectangulaire (2) détaché d'un substrat (40) et pour le retourner de 180° au moyen d'un mouvement de rotation autour de l'axe X et pour le transporter vers une position de transfert ; dans lequel
une deuxième unité de réception (62) est conçue pour prendre en charge le composant semi-conducteur (2) à la position de transfert de la première unité de réception (60) et pour le transporter dans la position d'examen ;
un premier ensemble d'éclairage (4, 6), un second ensemble d'éclairage (8, 10) et une première caméra (12) et une seconde caméra (14); les deux caméras (12, 14) étant conçues et agencées pour fournir des images basées sur la lumière visible et la lumière infrarouge ; et dans lequel
la première caméra (12) et la deuxième caméra (14) sont chacune adaptées pour être dirigées vers différentes surfaces du composant semi-conducteur (2) dans la position d'examen, et
le premier dispositif d'éclairage (4, 6) est conçu pour émettre, à partir de plusieurs diodes électroluminescentes, de la lumière infrarouge respectivement perpendiculairement sur deux surfaces du composant à semi-conducteur (2) se trouvant dans la position d'examen, qui sont respectivement opposées au dispositif d'imagerie (12, 14) et qui sont perpendiculairement contiguës, et dans lequel
la lumière infrarouge émise sur les surfaces est respectivement appropriée pour pénétrer complètement au moins en partie le composant semi-conducteur (2), et dans lequel
le deuxième dispositif d'éclairage (8, 10) est conçu pour émettre de la lumière visible avec plusieurs diodes électroluminescentes respectivement perpendiculairement sur deux surfaces du composant semi-conducteur (2) se trouvant dans la position d'examen qui sont respectivement tournées vers le dispositif d'imagerie (12, 14) et verticalement adjacentes l'une à l'autre et qui sont respectivement opposées aux surfaces sur lesquelles la lumière infrarouge est dirigée par le premier dispositif d'éclairage (4, 6), et où
le premier dispositif d'éclairage (4, 6) et le deuxième dispositif d'éclairage (8, 10) sont adaptés pour éclairer simultanément le composant se-mi-conducteur (2), et dans lequel
le deuxième ensemble d'éclairage (8, 10) est en outre adapté pour émettre la lumière visible, respectivement, de telle sorte qu'elle soit guidée par des éléments optiquement actifs (22, 24), les éléments optiquement actifs étant adaptés pour avoir un degré prédéterminé de transmission de la lumière visible dans une direction d'émission du deuxième ensemble d'éclairage (8, 10) et pour avoir un degré prédéterminé de réflexion de la lumière visible et de la lumière infrarouge à partir des directions respectivement opposées de 180°, où
les éléments optiquement actifs (22, 24) sont en outre adaptés pour réfléchir la lumière visible et la lumière infrarouge respectivement dans une direction différente des directions d'émission du second agencement d'éclairage (8, 10) et des directions opposées à celle-ci de 180°, et dans lequel la première caméra (12) et la seconde caméra (14) sont respectivement adaptées et agencées pour détecter à la fois le spectre de lumière émis par le premier agencement d'éclairage (4, 6) et le spectre de lumière émis par le second agencement d'éclairage (8, 10), et dans lequel
la première caméra (12) et la deuxième caméra (14) sont respectivement conçues pour mettre à disposition d'une évaluation d'image en aval, sur la base du spectre de lumière visible ainsi que du spectre de lumière infrarouge, respectivement une entrée d'image séparée pour la détermination de défauts de propriétés ou de détériorations du composant semi-conducteur (2), les caméras (12, 14) étant respectivement conçues pour utiliser, au moins par sections, le même trajet de faisceau optique pour enregistrer la lumière visible réfléchie par le composant (2) et pour enregistrer la lumière infrarouge traversant le composant (2).

2. un dispositif d'examen optique (200) adapté et déterminé pour détecter des propriétés d'un composant semi-conducteur rectangulaire (2) détaché d'un substrat et maintenu par un premier dispositif de retournement, comprenant :
- un dispositif de retournement pouvant tourner autour d'un axe de rotation et se présentant sous la forme d'une roue, qui comporte sur sa périphérie plusieurs récepteurs qui sont chacun conçus pour maintenir un composant se-mi-conducteur (2) rectangulaire avec une dépression et pour le transférer en un point de transfert à un deuxième dispositif de retournement de construction sensiblement identique au premier dispositif de retournement et pouvant également tourner autour d'un axe de rotation ;
- un premier ensemble d'éclairage (4, 6), un second ensemble d'éclairage (8, 10) et une première caméra (12) et une seconde caméra (14) ; les deux caméras (12, 14) étant conçues et agencées pour fournir des images basées sur la lumière visible et la lumière infrarouge, et dans lequel le premier dispositif d'éclairage (4, 6) est constitué de plusieurs diodes électroluminescentes qui sont conçues pour émettre de la lumière infrarouge respectivement perpendiculairement sur deux surfaces opposées l'une à l'autre, respectivement opposées au dispositif d'imagerie (12, 14), du composant semi-conducteur (2) maintenu par le capteur, la lumière infrarouge traversant respectivement complètement, au moins en partie, le composant semi-conducteur (2), et
le deuxième dispositif d'éclairage (8, 10) est constitué de plusieurs diodes électroluminescentes qui sont adaptées pour émettre de la lumière visible respectivement perpendiculairement à deux surfaces opposées du composant semi-conducteur (2) maintenu par le capteur, qui sont respectivement tournées vers le dispositif d'imagerie (12, 14), et dans lequel
le premier dispositif d'éclairage (4, 6) et le deuxième dispositif d'éclairage (8, 10) sont adaptés pour éclairer simultanément le composant se-mi-conducteur (2), et dans lequel
les ensembles d'éclairage (4, 6, 8, 10) sont en outre adaptés pour émettre la lumière visible et la lumière infrarouge, respectivement, de telle sorte qu'elles soient guidées par des éléments optiquement actifs (22, 24), les éléments optiquement actifs (22, 24) étant adaptés pour, présenter un degré prédéterminé de transmission de la lumière visible et infrarouge dans une direction d'émission commune respective des premier et deuxième ensembles d'éclairage (4, 6, 8, 10) et présenter un degré prédéterminé de réflexion de la lumière visible et infrarouge à partir de la direction opposée respective de 180°, où
les éléments optiquement actifs (22, 24) sont en outre adaptés pour réfléchir la lumière visible et la lumière infrarouge respectivement dans une direction différente des directions d'émission du second agencement d'éclairage (8, 10) et des directions opposées à celle-ci de 180°, et dans lequel
les deux caméras (12, 14) sont adaptées pour être dirigées chacune vers l'une des surfaces du dispositif à semi-conducteur (2) sur laquelle la lumière est émise par les premier et deuxième dispositifs d'éclairage (4, 6, 8, 10), et dans lequel
la première caméra (12) et la deuxième caméra (14) sont chacune conçues et agencées pour détecter à la fois le spectre lumineux émis par le premier ensemble d'éclairage (4, 6) et le spectre lumineux émis par le deuxième ensemble d'éclairage (8, 10), et dans lequel
la première caméra (12) et la deuxième caméra (14) sont respectivement conçues pour mettre à disposition d'une évaluation d'image en aval, sur la base aussi bien du spectre de lumière visible que du spectre de lumière infrarouge, respectivement une entrée d'image séparée pour déterminer des défauts de propriétés ou des endommagements du composant semi-conducteur (2), et les caméras (12, 14) étant respectivement conçues pour utiliser, au moins par sections, le même trajet optique des rayons pour enregistrer la lumière visible réfléchie par le composant (2) et pour enregistrer la lumière infrarouge traversant le composant (2).

3. Le dispositif d'examen optique (100, 200) selon l'une des revendications précédentes, dans lequel les éléments optiquement actifs (22, 24) comprennent au moins un demi-miroir, dans lequel
le demi-miroir (22, 24) est disposé à un angle d'environ 45° par rapport à l'axe optique du dispositif d'imagerie (12, 14) et sert à coupler optiquement la lumière du premier et/ou du deuxième dispositif d'éclairage (4, 6, 8, 10) et à la diriger sur le composant (2), et dans lequel
le demi-miroir (22, 24) est adapté et agencé pour diriger la lumière visible réfléchie par le composant (2) et la lumière infrarouge pénétrant dans le composant (2) vers le dispositif d'imagerie (12, 14).

4. Le dispositif d'examen optique (100, 200) selon l'une quelconque des revendications précédentes, dans lequel le premier ensemble d'éclairage (4, 6) et/ou le deuxième ensemble d'éclairage (8, 10) et/ou un seul ou une pluralité des éléments optiquement actifs sont conçus et agencés pour être orientés et/ou focalisés chacun indépendamment des autres.

5. Un procédé d'examen optique de composants semi-conducteurs (2) avec un dispositif selon la revendication 1 ou un dispositif selon la revendication 2, comprenant les étapes de procédé suivantes :
- eclairage de deux surfaces différentes d'un composant semi-conducteur (2) maintenu par une unité de réception ou un capteur avec de la lumière infrarouge, laquelle pénètre respectivement complètement au moins en partie le composant semi-conducteur (2),
- eclairage de deux surfaces différentes d'un composant semi-conducteur (2) maintenu par l'unité de réception ou le capteur avec de la lumière visible, les surfaces éclairées à la lumière visible étant respectivement opposées aux surfaces éclairées à la lumière infrarouge,
- détection de la lumière visible réfléchie par les deux surfaces éclairées par de la lumière visible du composant (2) maintenu par l'unité de réception ou le capteur et de la lumière infrarouge traversant le composant (2) à partir des deux surfaces éclairées par de la lumière infrarouge avec au moins un dispositif d'imagerie (12, 14) qui utilise à cet effet respectivement au moins partiellement le même trajet de faisceau optique,
- réalisation de deux images respectives des surfaces du composant respectivement éclairées par la lumière visible, l'une des deux images respectives étant réalisée sur la base de la lumière visible réfléchie par la surface du composant et l'autre sur la base de la lumière infrarouge pénétrant dans le composant (2),
- examen de composant pour déterminer s'il est endommagé grâce à une évaluation d'image en aval à l'aide d'images.
